# EUROPÄISCHE PATENTSCHRIFT

(11) **EP 1 356 668 B1**
(45) Veröffentlichungstag und Bekanntmachung des Hinweises auf die Patenterteilung: **07.03.2007**
(21) Anmeldenummer: 02714126.6
(22) Anmeldetag: 29.01.2002
(51) Int. Cl.: H04N 5/00

(54) **VORRICHTUNG MIT MEHREREN TRANSPORTSTROMPFADEN ZUM EMPFANG VON DIGITALEN RUNDFUNKSIGNALEN**
DEVICE WITH SEVERAL TRANSPORT CURRENT PATHS FOR RECEIVING DIGITAL RADIO SIGNALS
DISPOSITIF COMPORTANT PLUSIEURS VOIES DE COURANT DE TRANSPORT POUR LA RECEPTION DE SIGNAUX RADIO NUMERIQUES

(30) Priorität: 01.02.2001 DE 10104440
(43) Veröffentlichungstag der Anmeldung: 29.10.2003
(73) Patentinhaber: Grundig Multimedia B.V., 1083HJ Amsterdam (NL)
(72) Erfinder: HORN, Bernhard, 91301 Forchheim (DE); THOMA, Heinrich, 91599 Dentlein a.F. (DE)
(74) Vertreter: Pröll, Jürgen
(86) Internationale Anmeldenummer: PCT/EP2002/000872
(87) Internationale Veröffentlichungsnummer: WO 2002/062053

(56) Entgegenhaltungen:
- WO-A-00/07368
- WO-A-99/52276
- US-A- 5 754 651
- US-A- 5 801 785
- JOHNSON L ET AL: "LOW COST PICTURE-IN-PICTURE FOR COLOR TV RECEIVERS" PROCEEDINGS OF THE INTERNATIONAL CONFERENCE ON CONSUMER ELECTRONICS. (ICCE). ROSEMONT, ILL., JUNE 6 - 8, 1990, NEW YORK, IEEE, US, Bd. CONF. 9, 6. Juni 1990 (1990-06-06), Seiten 80-81, XP000169767

## Beschreibung

Die Erfindung betrifft eine Vorrichtung zum Empfang von digitalen Rundfunksignalen.

Es sind bereits sogenannte Settop-Boxen bekannt, die zum Empfang von analogen und/oder digitalen Satelliten-Rundfunksignalen vorgesehen sind. Derartige Settop-Boxen werden üblicherweise in Form eines eigenständigen Gerätes realisiert und zwischen die Außeneinheit einer Satelliten-Empfangsanlage und einen herkömmlichen Fernsehempfänger geschaltet. In einer derartigen Settop-Box erfolgt eine Umsetzung der von der Außeneinheit der Satelliten-Empfangsanlage abgeleiteten Signale in Signale, die einem herkömmlichen Fernsehempfänger über dessen HF-Eingang oder über dessen Euro-AV-Buchse zugeführt werden.

Es ist weiterhin bereits bekannt, die Baugruppen einer Settop-Box in Form eines Moduls zu realisieren und dieses Modul in das Gehäuse eines Fernsehempfängers zu integrieren.

Über Rundfunksatelliten übertragene digitale Rundfunksignale können neben digitalen Audio- und Videodaten auch digitale Teletextdaten und andere digitale Daten enthalten, die mittels eines digitalen Empfangsgerätes empfangbar sind. Weiterhin ist es auch wünschenswert, mittels eines digitalen Empfangsgerätes Zugriff auf Internetdaten und/oder andere Datendienste zu haben. Will man mittels eines einzigen digitalen Empfangsgerätes eine Vielzahl von verschiedenartigen digitalen Daten empfangen und verarbeiten können, muß man in Kauf nehmen, dass die Herstellungs- und damit auch die Endverkaufspreise für digitale Empfangsgeräte hoch sind. Weiterhin sind derartige digitale Empfangsgeräte in ihrem Aufbau kompliziert, so dass an den Geräteentwickler hohe Anforderungen gestellt sind. Weiterhin wird in der Praxis von den meisten Käufern eines derartigen digitalen Empfangsgerätes eine Vielzahl der Funktionen des Gerätes niemals genutzt. Dennoch müssen auch diese Gerätekäufer die genannten hohen Preise für die digitalen Empfangsgeräte bezahlen.

Aus WO 00/07368 ist ein Rundfunkempfänger offenbart, welcher mit mehreren Transportstrompfaden mindestens zwei Signalmittel bedient. Es sind Schaltmittel vorhanden, über welche jeder Eingang mit jedem Ausgang verbunden werden kann.

Aus WO 99/52276 ist ein Videoproduktionssystem offenbart. Dieses Videoproduktionssystem ermöglicht anhand eines Dateneinganges diverse Programme aufzuzeichnen oder auf einem Bildschirm darzustellen.

Diese Nachteile werden bei einer Vorrichtung zum Empfang von digitalen Rundfunksignalen, wie sie in der
DE 10007710.2 beschrieben ist, vermieden. Diese bekannte Vorrichtung weist ein Zusatzmodul auf, welches mit einem digitalen Empfangsgerät über eine Geräteschnittstelle verbunden ist. Das Zusatzmodul ist mit einer Signalverarbeitungseinheit versehen, welcher eingangsseitig ein vom digitalen Empfangsgerät zur Verfügung gestellter, aus dem Empfangssignal abgeleiteter MPEG-Transportstrom zugeführt wird. Das Ausgangssignal der Signalverarbeitungseinheit des Zusatzmoduls gelangt über die Geräteschnittstelle zurück in das digitale Empfangsgerät und wird dort weiter verarbeitet.

Der Erfindung liegt die Aufgabe zugrunde, einen Weg aufzuzeigen, wie die Nutzungsmöglichkeiten der bekannten Vorrichtung erweitert werden können.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass jeder der im digitalen Rundfunkempfänger vorgesehenen Transportstrompfade mit jeder der Signalsenken verbindbar ist. Dies eröffnet bei einem gleichzeitigen Empfang verschiedener Rundfunkprogramme, insbesondere codierter bzw. verschlüsselter Rundfunkprogramme derselben Codierung, die Möglichkeit, eines dieser Programme mittels eines vorhandenen Decoders bzw. Entschlüsslers zu decodieren und über ein Wiedergabegerät in decodierter Form wiederzugeben, und das andere Programm in codierter bzw. verschlüsselter Form abzuspeichern. Das in codierter Form abgespeicherte Signal kann zu einem späteren Zeitpunkt, zu dem der Decoder nicht mehr anderweitig benötigt wird, decodiert und in decodierter Form wiedergegeben oder erneut abgespeichert werden.

Vorzugsweise weist der digitale Rundfunkempfänger, bei dem es sich um eine Settop-Box oder einen digitalen Fernsehempfänger handeln kann, mehrere Schnittstellen auf, über welche er mit mehreren Zusatzmodulen verbunden ist. Jedes dieser Zusatzmodule enthält eine oder mehrere Signalverarbeitungseinheiten, beispielsweise einen Entschlüssler, einen MP3-Tonsignaldecoder, einen Dolby-Surrounddecoder, usw.. Jedes dieser Zusatzmodule ist über die beanspruchten Schaltmittel mit jeder der Signalsenken verbindbar, so dass auch diesbezüglich die Nutzungsmöglichkeiten eines digitalen Rundfunkempfängers erweitert sind.

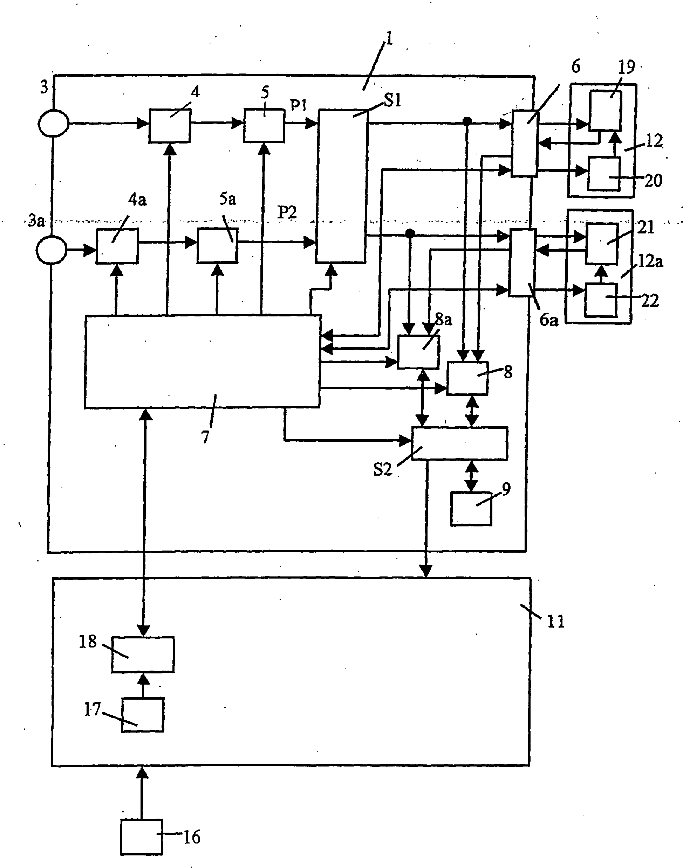

Weitere vorteilhafte Eigenschaften der Erfindung ergeben sich aus deren beispielhaften Erläuterung anhand der Figur, die ein Blockschaltbild einer Vorrichtung zum Empfang von digitalen Rundfunksignalen zeigt.

Die dargestellte Vorrichtung enthält einen digitalen Rundfunkempfänger 1, ein mit dem digitalen Rundfunkempfänger über eine Schnittstelle 6 verbundenes Zusatzmodul 12, ein mit dem digitalen Rundfunkempfänger über eine Schnittstelle 6a verbundenes Zusatzmodul 12a und ein mit dem digitalen Rundfunkempfänger verbundenes Fernsehgerät 11. Letzteres weist als Bedieneinheit einen Fernbedienungsgeber 16 auf, dessen Infrarot-Ausgangssignale von einem Fembedienempfänger 17 detektiert und an die Steuereinheit 18 des Fernsehgerätes weitergeleitet werden. Die Steuereinheit setzt die eingegebenen Bedienbefehle in Steuersignale für die weiteren Baugruppen des Fernsehgerätes um und steht auch in bidirektionaler Verbindung mit der Steuereinheit 7 des digitalen Rundfunkempfängers 1.

Der digitale Rundfunkempfänger, bei dem es sich beim gezeigten Ausführungsbeispiel um eine Settop-Box handelt, weist Eingangsanschlüsse 3 und 3a auf. Der Eingangsanschluss 3 ist ein SatellitensignalEingangsanschluss, über welchen dem digitalen Rundfunkempfänger von einer Satellitenantenne abgeleitete digitale Signale zugeführt werden. Beim Eingangsanschluss 3a handelt es sich um einen an eine Kabelübertragungsstrecke angeschlossenen Eingangsanschluss, über welchen dem digitalen Rundfunkempfänger über Kabel übertragene digitale Signale zugeleitet werden.

Der Eingangsanschluss 3 ist mit einer Empfangseinheit verbunden, die einen Tuner 4 und einen Demodulator 5 aufweist. Der Demodulator 5 stellt an seinem Ausgang digitale Daten in Form eines MPEG-Transportstroms zur Verfügung. Dieser Transportstrom enthält einen Multiplex von mehreren Services, wobei die Signale in Form von Paketen übertragen werden. Ein Service kann ein oder mehrere Fernsehprogramme, ein oder mehrere Radioprogramme, Zusatzdaten zu den Radio- bzw. Fernsehprogrammen wie Teletextdaten, mehrsprachige Audiodaten, eine Programmzeitschrift oder Untertiteldaten enthalten. Weiterhin kann ein Service auch Datendienste oder Programme im EDV-Sinne enthalten. Der Tuner 4 und der Demodulator 5 werden durch Steuersignale gesteuert, die von einer zentralen Steuereinheit 7 des digitalen Rundfunkempfängers generiert werden.

Der Eingangsanschluss 3a ist mit einer Empfangseinheit verbunden, die einen Tuner 4a und einen Demodulator 5a aufweist. Auch der Demodulator 5a stellt an seinem Ausgang digitale Daten in Form eines MPEG-Transportstroms zur Verfügung. Dieser Transportstrom enthält einen Multiplex von mehreren Services, wobei die Signale in Form von Paketen übertragen werden. Ein Service kann ein oder mehrere Fernsehprogramme, ein oder mehrere Radioprogramme, Zusatzdaten zu den Radio- bzw. Fernsehprogrammen wie Teletextdaten, mehrsprachige Audiodaten, eine Programmzeitschrift oder Untertiteldaten enthalten. Weiterhin kann ein Service auch Datendienste oder Programme im EDV-Sinne enthalten. Der Tuner 4a und der Demodulator 5a werden durch Steuersignale gesteuert, die ebenfalls von der zentralen Steuereinheit 7 des digitalen Rundfunkempfängers generiert werden.

Am Ausgang der Demodulatoren 5 und 5a liegen folglich MPEG-Transportstrompfade P1 und P2 vor, die mit den Eingängen eines ersten Schalters S1 verbunden sind.

Der am oberen Ausgang des Schalters S1 vorliegende MPEG-Transportstrom wird an eine Signalverarbeitungseinheit 8 und an die Schnittstelle 6 weitergeleitet. Über die Schnittstelle 6 gelangt der MPEG-Transportstrom an das Zusatzmodul 12, weiches einen Entschlüssler 19 und eine Steuereinheit 20 aufweist. Die Steuereinheit 20 des Zusatzmoduls 12 steht über die Schnittstelle 6 in bidirektionaler Verbindung mit der Steuereinheit 7 des digitalen Rundfunkempfängers 1. Beispielsweise erfolgt über diese Verbindung eine Übertragung von Kennsignalen für einen zu entschlüsselnden Unterdatenstrom des MPEG-Transportstroms, die im Zusatzmodul zur Signalentschlüsselung benötigt werden. Die im Zusatzmodul 12 entschlüsselten Signale werden über die Schnittstelle 6 in den digitalen Rundfunkempfänger 1 zurückgeführt und dort an die Signalverarbeitungseinheit 8 weitergeleitet.

Der am unteren Ausgang des Schalters S1 vorliegende MPEG-Transportstrom wird an eine Signalverarbeitungseinheit 8a und an die Schnittstelle 6a weitergeleitet. Über die Schnittstelle 6a gelangt der MPEG-Transportstrom an das Zusatzmodul 12a, welches einen MP3-Decoder 21 und eine Steuereinheit 22 aufweist. Die Steuereinheit 22 des Zusatzmoduls 12a steht über die Schnittstelle 6a in bidirektionaler Verbindung mit der Steuereinheit 7 des digitalen Rundfunkempfängers 1. Beispielsweise erfolgt über diese Verbindung eine Übertragung von Kennsignalen für einen zu decodierenden Unterdatenstrom des MPEG-Transportstroms, die im Zusatzmodul zur Signaldecodierung benötigt werden. Die im Zusatzmodul 12a decodierten Signale werden über die Schnittstelle 6a in den digitalen Rundfunkempfänger 1 zurückgeführt und dort an die Signalverarbeitungseinheit 8a weitergeleitet.

Die Ausgänge der Signalverarbeitungseinheiten 8 und 8a sind mit den Eingängen eines zweiten Schalters S2 verbunden. Die am linken unteren Ausgang des Schalters S2 vorliegenden Signale werden an das Fernsehgerät 11 weitergeleitet und auf dessen Bildschirm dargestellt. Die am rechten unteren Ausgang des Schalters S2 vorliegenden Signale werden einem Festplattenspeicher 9 zugeführt und dort abgespeichert.

Die Schalter S1 und S2, die Zusatzmodule 12 und 12a sowie die Signalverarbeitungseinheiten 8 und 8a werden ebenfalls von der zentralen Steuereinheit 7 gesteuert.

Jeder der Transportstrompfade P1 und P2 ist über die Schaltmittel S1 und S2 mit jeder der Signalsenken 9 und 11 verbindbar. Ebenso ist jedes der Zusatzmodule 12 und 12a über den Schalter S2 mit jeder der Signalsenken 9 und 11 verbindbar. Dies wird nachfolgend beispielhaft erläutert.

Möchte der Benutzer eine bestimmte Fernsehsendung, die verschlüsselt über Satellit übertragen wird, live mittels des Fernsehgerätes 11 wiedergeben, dann gibt er mittels des Fembedienungsgebers 16 entsprechende Bedienbefehle ein. Diese werden vom Fernbedienempfänger 17 empfangen und an die Steuereinheit 18 des Fernsehgerätes 11 weitergeleitet. Die Steuereinheit 18 adressiert in Ansprache auf die eingegebenen Bedienbefehle einen Senderspeicher und liest von dort der Fernsehsendung zugehörige charakteristische Daten aus. Zu diesen gehören Informationen über die Signalquelle "Satellit", die Empfangsfrequenz, die Kennung des der Fernsehsendung entsprechenden Unterdatenstromes, die Art der Verschlüsselung des Signales, usw.. Diese charakteristischen Daten wurden im Rahmen der Programmierung des Senderspeichers bei der Inbetriebnahme der Vorrichtung abgespeichert bzw. mittels der Bedieneinheit eingegeben.

Die aus dem Senderspeicher ausgelesenen charakteristischen Daten der gewünschten Fernsehsendung werden von der Steuereinheit 18 des Fernsehgerätes 11 zur Steuereinheit 7 der Settop-Box 1 übertragen. Die Steuereinheit 7 erzeugt Steuersignale für den Empfangsteil 4, 5, den Schalter S1, das Zusatzmodul 12, die Signalverarbeitungseinheit 8 und den Schalter S2 derart, dass die gewünschte Fernsehsendung, die über den Transportstrompfad P1 übertragen wird, im Zusatzmodul 12 entschlüsselt und von dort aus über die Schnittstelle 6, die Signalverarbeitungseinheit 8 und den Schalter S2 dem Fernsehgerät 11 zugeführt und auf dessen Bildschirm wiedergegeben wird.

Möchte der Benutzer nun eine zweite, gleichzeitig übertragene Fernsehsendung, die verschlüsselt mit derselben Verschlüsselung wie die obige Fernsehsendung über Kabel übertragen wird, empfangen und wiedergeben, dann geschieht dies wie folgt:
Der Benutzer gibt mittels des Fernbedienungsgebers 16 entsprechende Bedienbefehle ein. Diese werden vom-Fernbedienempfänger 17 empfangen und an die Steuereinheit 18 des Fernsehgerätes 11 weitergeleitet. Die Steuereinheit 18 adressiert in Ansprache auf die eingegebenen Bedienbefehle den Senderspeicher und liest von dort der zweiten Fernsehsendung zugehörige charakteristische Daten aus. Zu diesen gehören Information über die Signalquelle "Kabel", die Empfangsfrequenz, die Kennung des der zweiten Fernsehsendung entsprechenden Unterdatenstromes, die Art der Verschlüsselung des Signals, usw..
Die aus dem Senderspeicher ausgelesenen charakteristischen Daten der zweiten Fernsehsendung werden von der Steuereinheit 18 des Fernsehgerätes 11 zur Steuereinheit 7 der Settop-Box 1 übertragen. Die Steuereinheit 7 erkennt, dass zu einer Wiedergabe der zweiten Fernsehsendung auch eine Entschlüsselung im Zusatzmodul 12 notwendig ist. Das Zusatzmodul 12 wird jedoch momentan zur Entschlüsselung der ersten, im Transportstrompfad P1 übertragenen Fernsehsendung benötigt und steht deshalb derzeit nicht zur Verfügung. Folglich erzeugt die Steuereinheit 7 Steuersignale für den Empfangsteil 4a, 5a, den Schalter S1, die Signalverarbeitungseinheit 8a und den Schalter S2 derart, dass die gewünschte zweite Fernsehsendung, die im Transportstrompfad P2 übertragen wird, in verschlüsselter Form über den Schalter S2 dem Festplattenspeicher 9 zugeführt und dort abgespeichert wird.

Wird zu einem späteren Zeitpunkt der im Zusatzmodul 12 enthaltene Entschlüssler nicht mehr zur Entschlüsselung der im Transportstrompfad P1 enthaltenen ersten Fernsehsendung benötigt, dann kann die Entschlüsselung der verschlüsselt im Festplattenspeicher 9 abgespeicherten zweiten Fernsehsendung nachgeholt werden. Die entschlüsselte zweite Fernsehsendung steht dann für eine Wiedergabe auf dem Bildschirm des Fernsehgerätes 11 oder für eine entschlüsselte Aufzeichnung auf einem nicht gezeichneten Aufzeichnungsträger zur Verfügung.

Eine Entscheidung darüber, welcher der gleichzeitig übertragenen Fernsehsendungen die höhere Priorität zugeordnet wird, kann der Benutzer mittels der Bedieneinheit treffen. Beispielsweise initiiert die Steuereinheit des Gerätes beim Erkennen einer derartigen gleichzeitigen Übertragung zweier Fernsehsendungen gleicher Codierung bzw. Verschlüsselung eine Bildschirmanzeige, durch welche der Benutzer dazu aufgefordert wird anzugeben, welche der Sendungen live decodiert und wiedergegeben und welche der Sendungen codiert bzw. verschlüsselt abgespeichert werden soll:
Alternativ dazu ist auch eine Verwendung einer in einem Speicher abgespeicherten Prioritätsliste möglich. Soll beispielsweise eine der beiden Fernsehsendungen mittels eines an den Fernsehempfänger angeschlossenen Videorecorders aufgezeichnet und die andere am Bildschirm betrachtet werden, dann kann der am Bildschirm zu betrachtenden Sendung die höhere Priorität zugeordnet sein. In diesem Fall erfolgt eine Decodierung bzw. Entschlüsselung und Wiedergabe der am Bildschirm darzustellenden Sendung in Echtzeit sowie eine Abspeicherung der auf den Videorecorder aufzuzeichnenden Sendung in codierter bzw. verschlüsselter Form im Festplattenspeicher. Wird dann der Decoder bzw. Entschlüssler nicht mehr anderweitig benötigt, dann können die vom Festplattenspeicher wiedergegebenen codierten bzw. verschlüsselten Signale decodiert und nachfolgend in decodierter Form mittels des Videorecorders aufgezeichnet werden.

Der Beginn der Wiedergabe der codierten Signale vom Festplattenspeicher zum Zwecke der Decodierung kann entweder in Ansprache auf einen mittels der Bedieneinheit eingegebenen Bedienbefehl oder automatisch erfolgen, beispielsweise dann, wenn der Benutzer das Gerät in den Bereitschaftsbetrieb schaltet. Die Geschwindigkeit der Decodierung der vom Festplattenspeicher wiedergegebenen codierten Signale kann mit der maximal möglichen Symbolrate durchgeführt werden.

## Patentansprüche

1. Vorrichtung zum Empfang von digitalen Rundfunksignalen, mit
- einem mehrere Transportstrompfade aufweisenden digitalen Rundfunkempfänger und
- mindestens zwei Signalsenken,
**dadurch gekennzeichnet, dass**
ein erster Transportstrompfad zur Übertragung eines ersten codierten Rundfunksignals und ein zweiter Transportstrompfad zur gleichzeitigen Übertragung eines zweiten codierten Rundfunksignals, dessen Codierung mit der Codierung des ersten Rundfunksignals übereinstimmt, dient,
Schaltmittel (S1, S2), über welche jeder der Transportstrompfade (P1, P2) mit jeder der beiden Signalsenken (9, 11) verbindbar ist, vorhanden sind, wobei die Schaltmittel einen ersten Schalter (S1) aufweisen, über welchen jeder der Transportstrompfade (P1, P2) über eine erste Schnittstelle (6) des digitalen Rundfunkempfängers (2) mit einem ersten, einen Decodierer zur Decodierung der Signale mit der genannten Codierung aufweisenden Zusatzmodul (12) verbindbar ist, und eine Steuereinheit (7) die Schaltmittel (S1, S2) derart steuert, dass eines der codierten Rundfunksignale in decodierter Form der ersten Signalsenke und das andere der codierten Rundfunksignale in codierter Form der zweiten Signalsenke zugeleitet wird.

2. Vorrichtung nach Anspruch 1,
**dadurch gekennzeichnet, dass**
einer der Transportstrompfade (P1) zur Übertragung eines von einem Satellitensignaleingangsanschluss (3) des digitalen Rundfunkempfängers (1) abgeleiteten MPEG-Transportstroms dient.

3. Vorrichtung nach einem der Ansprüche 1 und 2,
**dadurch gekennzeichnet, dass**
einer der Transportstrompfade (P2) zur Übertragung eines von einem Kabelsignaleingangsanschluss (3a) oder einem terrestrischen Antenneneingangsanschluss des digitalen Rundfunkempfängers (1) abgeleiteten MPEG-Transportstroms dient.

4. Vorrichtung nach einem der vorhergehenden Ansprüche,
**dadurch gekennzeichnet, dass**
die Schaltmittel einen ersten Schalter (S1) aufweisen, über welchen jeder der Transportstrompfade (P1, P2) direkt mit einer Signalverarbeitungseinheit (8, 8a) des digitalen Rundfunkempfängers (1) verbindbar ist.

5. Vorrichtung nach Anspruch 4,
**dadurch gekennzeichnet, dass**
der digitale Rundfunkempfänger (1) zwei parallel geschaltete Signalverarbeitungseinheiten (8, 8a) aufweist, deren Ausgänge an einen zweiten Schalter (S2) angeschlossen sind, über welchen jede der Signalverarbeitungseinheiten (8, 8a) mit jeder der beiden Singalsenken (9, 11) verbindbar ist.

6. Vorrichtung nach einem der vorhergehenden Ansprüche,
**dadurch gekennzeichnet, dass**
eine der Signalsenken eine Signalwiedergabeeinheit (11) und die andere eine Speichereinheit (9) ist.

7. Vorrichtung nach Anspruch 6,
**dadurch gekennzeichnet, dass**
die Speichereinheit ein Festplattenspeicher (9) ist.

8. Vorrichtung nach einem der vorhergehenden Ansprüche,
**dadurch gekennzeichnet, dass**
die Steuereinheit (7) eine zentrale Steuereinheit des digitalen Rundfunkempfängers (1) ist, die zur Generierung von Umschaltsteuersignalen für die Schaltmittel (S1, S2) dient.

9. Vorrichtung nach Anspruch 8,
**dadurch gekennzeichnet, dass**
die Steuereinheit (7) die Umschaltsignale als Reaktion auf mittels einer Bedieneinheit (16, 17) eingegebene Bedienbefehle generiert.

10. Vorrichtung nach Anspruch 9,
**dadurch gekennzeichnet, dass**
die Bedienbefehle mittels einer Fernbedieneinheit (16) eines Fernsehempfängers (11) eingebbar sind und von einer Steuereinheit (18) des Fernsehempfängers (11) an die Steuereinheit (7) des digitalen Rundfunkempfängers (1) übertragbar sind.

11. Vorrichtung nach einem der vorhergehenden Ansprüche,
**dadurch gekennzeichnet, dass**
die Steuereinheit (7) des digitalen Rundfunkempfängers (1) mit einer Steuereinheit des ersten Zusatzmoduls (12) über die erste Schnittstelle (6) verbunden ist.

12. Vorrichtung nach einem der vorhergehenden Ansprüche,
**dadurch gekennzeichnet, dass**
die Steuereinheit (7) des digitalen Rundfunkempfängers (1) die Schaltmittel (S1, S2), die Signalverarbeitungseinheiten (8, 8a) und das erste Zusatzmodul (12) derart steuert, dass
- ein von einem ersten Transportstrompfad abgeleitetes codiertes Rundfunksignal im ersten Zusatzmodul (12) einer Decodierung unterworfen wird, das vom ersten Transportstrompfad abgeleitete decodierte Rundfunksignal vom ersten Zusatzmodul (12) über die Schnittstelle (6) an den digitalen Rundfunkempfänger (1) zurückübertragen und dort über die Signalverarbeitungseinheit (8) an das Signalwiedergabegerät (11) weitergleitet wird, und
- ein von einem zweiten Transportstrompfad abgeleitetes, derselben Codierung wie das vom ersten Transportstrom abgeleitete Rundfunksignal unterworfenes zweites codiertes Rundfunksignal über die Schaltmittel (S1, S2) in codierter Form der Speichereinheit (9) zugeführt wird.

13. Vorrichtung nach einem der vorhergehenden Ansprüche,
**dadurch gekennzeichnet, dass**
der digitale Rundfunkempfänger (1) mehrere Schnittstellen (6, 6a) aufweist, über welche der digitale Rundfunkempfänger (1) jeweils mit einem Zusatzmodul (12, 12a) verbunden ist, dass die Ausgangssignale des jeweiligen Zusatzmoduls über die jeweilige Schnittstelle (6, 6a) in den digitalen Rundfunkempfänger (1) zurückübertragen werden und jedes der Zusatzmodule über die jeweilige Schnittstelle (6, 6a) und die Schaltmittel mit jeder der Signalsenken (9, 11) verbindbar ist.

14. Vorrichtung nach einem der vorhergehenden Ansprüche,
**dadurch gekennzeichnet, dass**
einem der Rundfunksignale eine höhere Priorität zugeordnet ist als dem anderen.

15. Vorrichtung nach Anspruch 14,
**dadurch gekennzeichnet, dass**
die Prioritätszuordnung mittels der Bedieneinheit erfolgt.

16. Vorrichtung nach Anspruch 14 oder 15,
**dadurch gekennzeichnet, dass**
sie einen Speicher für eine Prioritätsliste aufweist.

17. Vorrichtung nach einem der Ansprüche 12 bis 16
**dadurch gekennzeichnet, dass**
die Decodierung des vom zweiten Transportstrompfad abgeleiteten, in codierter Form abgespeicherten Signals nach Eingabe eines entsprechenden Bedienbefehls erfolgt.

18. Vorrichtung nach Anspruch 17,
**dadurch gekennzeichnet, dass**
der Bedienbefehl ein Standby-Befehl ist.

## Claims

1. Device for receiving digital broadcast signals, comprising
- a digital broadcast receiver having a plurality of transport-stream paths and
- at least two signal sinks,
**characterized in that**
a first transport-stream path serves to transmit a first coded broadcast signal and a second transport-stream path serves to transmit simultaneously a second coded broadcast signal whose coding is identical to the coding of the first broadcast signal,
switching means (S1, S2) are present by means of which each of the transport-stream paths (P1, P2) can be connected to each of the two signal sinks (9, 11), wherein the switching means have a first switch (S1) by means of which each of the transport-stream paths (P1, P2) can be connected via a first interface (6) of the digital broadcast receiver (1) to a first additional module (12) having a decoder for decoding the signals having the said coding,
and a control unit (7) that controls the switching means (S1, S2) in such a way that one of the coded broadcast signals is fed in decoded form to the first signal sink and the other of the coded broadcast signals is fed in coded form to the second signal sink.

2. Device according to Claim 1, **characterized in that** one of the transport-stream paths (P1) serves to transmit an MPEG transport stream derived from a satellite signal input terminal (3) of the digital broadcast receiver (1).

3. Device according to either of Claims 1 or 2, **characterized in that** one of the transport-stream paths (P2) serves to transmit an MPEG transport stream derived from a cable signal input terminal (3a) or a terrestrial antenna input terminal of the digital broadcast receiver (1).

4. Device according to any one of the preceding claims, **characterized in that** the switching means have a first switch (S1) by means of which each of the transport-stream paths (P1, P2) can be connected directly to a signal-processing unit (8, 8a) of the digital broadcast receiver (1).

5. Device according to Claim 4, **characterized in that** the digital broadcast receiver (1) has two signal-processing units (8, 8a) connected in parallel whose outputs are connected to a second switch (S2) by means of which each of the signal-processing units (8, 8a) can be connected to each of the two signal sinks (9, 11).

6. Device according to any one of the preceding claims, **characterized in that** one of the signal sinks is signal reproduction unit (11) and the other is a memory unit (9).

7. Device according to Claim 6, **characterized in that** the memory unit is a hard-disc memory (9).

8. Device according to any one of the preceding claims, **characterized in that** the control unit (7) is a central control unit of the digital broadcast receiver (1), which central control unit serves to generate switching control signals for the switching means (S1, S2).

9. Device according to Claim 8, **characterized in that** the control unit (7) generates the switching signals in response to operating commands entered by means of an operating unit (16, 17).

10. Device according to Claim 9, **characterized in that** the operating commands can be entered by means of a remote control unit (16) of a television receiver (11) and can be transmitted by a control unit (18) of the television receiver (11) to the control unit (7) of the digital broadcast receiver (1).

11. Device according to any one of the preceding claims, **characterized in that** the control unit (7) of the digital broadcast receiver (1) is connected to a control unit of the first additional module (12) via the first interface (6).

12. Device according to any one of the preceding claims, **characterized in that** the control unit (7) of the digital broadcast receiver (1) controls the switching means (S1, S2), the signal processing units (8, 8a) and the first additional module in such a way that
- a coded broadcast signal derived from a first transport-stream path is subjected to a decoding in the first additional module (12) and the decoded broadcast signal derived from the first transport-stream path is transmitted back by the first additional module (12) via the interface (6) to the digital broadcast receiver (1) and is fed there via the signal-processing unit (8) to the signal-reproduction (11) appliance, and
- a second coded broadcast signal derived from the second transport-stream path and subjected to the same coding as the broadcast signal derived from the first transport stream is fed in coded form to the memory unit (9) via the switching means (S1, S2).

13. Device according to any one of the preceding claims, **characterized in that** the digital broadcast receiver (1) has a plurality of interfaces (6, 6a) via which the digital broadcast receiver (1) is connected in each case to an additional module (12, 12a), and **in that** the output signals of the respective additional module are transmitted back into the digital broadcast receiver (1) via the respective interface (6, 6a) and each of the additional modules can be connected to each of the signal sinks (9, 11) via the respective interface (6, 6a) and the switching means.

14. Device according to any one of the preceding claims, **characterized in that** a higher priority is allocated to one of the broadcast signals than to the other.

15. Device according to Claim 14, **characterized in that** the priority is allocated by means of the operating unit.

16. Device according to Claims 14 or 15, **characterized in that** it has a memory for a priority list.

17. Device according to any one of Claims 12 to 16, **characterized in that** the signal derived from the second transport-stream path and stored in coded form is decoded after entering an appropriate operating command.

18. Device according to Claim 17, **characterized in that** the operating command is a standby command.

## Revendications

1. Dispositif pour la réception de signaux radio numériques, comportant
- un récepteur radio numérique présentant plusieurs trajets de flux de transport et
- au moins deux récepteurs de signaux,
**caractérisé en ce que**
un premier trajet de flux de transport est utilisé pour la transmission d'un premier signal radio codé et un second trajet de flux de transport est utilisé pour la transmission simultanée d'un second signal radio codé, dont le codage correspond au codage du premier signal radio,
il existe des moyens de commutation (S1, S2), par l'intermédiaire desquels chacun des trajets de flux de transport (P1, P2) peut être connecté à chacun des deux récepteurs de signaux (9, 11), où les moyens de commutation présentent un premier commutateur (S1), par l'intermédiaire duquel chacun des trajets de flux de transport (P1, P2) peut être relié par l'intermédiaire d'une première interface (6) du récepteur radio numérique (2) à un premier module supplémentaire (12) présentant un décodeur pour le décodage des signaux avec le codage connu et une unité de commande (7) commande les moyens de commutation (S1, S2) de sorte qu'un des signaux radio codés est délivré sous forme décodée au premier récepteur de signaux et l'autre des signaux radio codés est délivré sous forme codée au second récepteur de signaux.

2. Dispositif selon la revendication 1, **caractérisé en ce qu'**un des trajets de flux de transport (P1) est utilisé pour la transmission d'un flux de transport MPEG délivré par une connexion d'entrée de signal satellite (3) du récepteur radio numérique (1).

3. Dispositif selon les revendications 1 et 2, **caractérisé en ce qu'**un des trajets de flux de transport (P2) est utilisé pour la transmission d'un flux de transport MPEG délivré par une raccord d'entrée de signal câblé (3a) ou par un raccord d'entrée d'antenne terrestre du récepteur radio numérique (1).

4. Dispositif selon l'une des revendications précédentes, **caractérisé en ce que** les moyens de commutation présentent un premier commutateur (S1), par l'intermédiaire duquel chacun des trajets de flux de transport (P1, P2) peut être relié directement à une unité de traitement de signaux (8, 8a) du récepteur radio numérique (1).

5. Dispositif selon la revendication 4, **caractérisé en ce que** le récepteur radio numérique (1) présente deux unités de traitement de signaux en parallèle (8, 8a), dont les sorties sont reliées à un second commutateur (S2), par l'intermédiaire duquel chacune des unités de traitement de signaux (8, 8a) peut être reliée à chacun des deux récepteurs de signaux (9, 11).

6. Dispositif selon l'une des revendications précédentes, **caractérisé en ce qu'**un des récepteurs de signaux est une unité de reproduction de signaux (11) et l'autre est une unité mémoire (9).

7. Dispositif selon la revendication 6, **caractérisé en ce que** l'unité mémoire est une mémoire de disque dur (9).

8. Dispositif selon l'une des revendications précédentes, **caractérisé en ce que** l'unité de commande (7) est une unité de commande centrale du récepteur radio numérique (1), qui est utilisée pour la génération de signaux de commande de commutation pour les moyens de commutation (S1, S2).

9. Dispositif selon la revendication 8, **caractérisé en ce que** l'unité de commande (7) génère les signaux de commutation en réaction aux commandes saisies par une télécommande (16, 17).

10. Dispositif selon la revendication 9, **caractérisé en ce que** les commandes sont saisies au moyen d'une télécommande (16) d'un téléviseur (11) et peuvent être transmises par une unité de commande (18) du téléviseur (11) à l'unité de commande (7) du récepteur radio numérique (1).

11. Dispositif selon l'une des revendications précédentes, **caractérisé en ce que** l'unité de commande (7) du récepteur radio numérique (1) est reliée à une unité de commande du premier module supplémentaire (12) par l'intermédiaire de la première interface (6).

12. Dispositif selon l'une des revendications précédentes, **caractérisé en ce que** l'unité de commande (7) du récepteur radio numérique (1) commande les moyens de commutation (S1, S2), les unités de traitement de signaux (8, 8a) et le premier module supplémentaire (12) de sorte que
- un signal radio codé délivré par un premier trajet de flux de transport est soumis à un décodage dans le premier module supplémentaire (12), le signal radio décodé délivré par le premier trajet de flux de transport est renvoyé par le premier module supplémentaire (12) par l'intermédiaire de l'interface (6) au récepteur radio numérique (1) et là est transmis par l'intermédiaire de l'unité de traitement de signaux (8) à l'appareil de reproduction de signaux (11), et
- un second signal radio codé délivré par un second trajet de flux de transport et soumis au même codage que le signal radio délivré par le premier flux de transport est délivré à l'unité mémoire (9) sous forme codée par l'intermédiaire des moyens de commutation (S1, S2).

13. Dispositif selon l'une des revendications précédentes, **caractérisé en ce que** le récepteur radio numérique (1) présente plusieurs interfaces (6, 6a), par l'intermédiaire desquelles le récepteur radio numérique (1) est relié respectivement à un module supplémentaire (12, 12a), **en ce que** les signaux de sortie du module supplémentaire respectif sont renvoyés par l'intermédiaire des interfaces respectives (6, 6a) aux récepteurs radio numériques (1) et chacun des modules supplémentaires peut être relié à chacun des récepteurs de signaux (9, 11) par l'intermédiaire des interfaces respectives (6, 6a) et des moyens de commutation.

14. Dispositif selon l'une des revendications précédentes, **caractérisé en ce qu'**on affecte une priorité plus élevée à l'indice signaux radio qu'à l'autre.

15. Dispositif selon la revendication 14, **caractérisé en ce que** l'affectation de priorité est effectuée au moyen d'une télécommande.

16. Dispositif selon la revendication 14 ou 15, **caractérisé en ce qu'**il présente une mémoire pour une liste de priorité.

17. Dispositif selon l'une des revendications 12 à 16, **caractérisé en ce que** le décodage du signal délivré par le second trajet de flux de transport et mémorisé sous forme codée est effectué après saisie d'une commande appropriée.

18. Dispositif selon la revendication 17, **caractérisé en ce que** la commande est une commande de stand-by.
